# FASCICULE DE BREVET EUROPEEN

(11) **EP 3 672 780 B1**
(45) Date de publication et mention de la délivrance du brevet: **05.07.2023**
(21) Numéro de dépôt: 18785695.0
(22) Date de dépôt: 22.08.2018
(51) Int. Cl.: B29C 51/14, B29C 51/00, B32B 1/00, B32B 3/04, B32B 3/26, B32B 3/30, B32B 5/02, B32B 15/14, B32B 15/18, B32B 15/20, B32B 27/28, B60R 13/08

(54) **ENSEMBLE FORMÉ 3D**
3D-GEFORMTE ANORDNUNG
3D SHAPED ASSEMBLY

(30) Priorité: 22.08.2017 FR 1757792
(43) Date de publication de la demande: 01.07.2020
(73) Titulaire: Hutchinson, 75008 Paris (FR)
(72) Inventeur: CHOPARD, Fabrice, 38400 Saint Martin D'Heres (FR); HUILLET, Cédric, 45200 Montargis (FR)
(74) Mandataire: Ernest Gutmann - Yves Plasseraud S.A.S.
(86) Numéro de dépôt international: PCT/FR2018/052094
(87) Numéro de publication internationale: WO 2019/038509

(56) Documents cités:
- EP-A2- 1 844 927
- WO-A1-88/09406
- WO-A1-99/42330
- WO-A1-2010/063079
- WO-A1-2015/093689
- WO-A2-2004/059063
- KR-A- 20160 061 382
- RU-A- 2013 147 163
- US-A- 4 035 215
- US-A- 5 098 624
- US-A1- 2008 081 163
- US-A1- 2016 167 597
- US-A1- 2017 088 750
- Anonymous: "Textile - Wikipédia", , 10 May 2021 (2021-05-10), XP055803208, Retrieved from the Internet: URL:https://fr.wikipedia.org/wiki/Textile [retrieved on 2021-05-10]

## Description

La présente invention concerne un ensemble formé en trois dimensions.

De nombreux éléments de doublure, typiquement de doublure intérieure, comme dans un véhicule, tel un aéronef, un navire, un train ou une automobile, sont déjà utilisés à des fins de protection, typiquement de protection thermique et/ou acoustique, ou encore comme élément de barrière anti-feu.

Pour ce type d'éléments, qui sont typiquement moulés, des problèmes existent toutefois encore tant en termes de réalisation structurelle que de conditions d'utilisation. Ainsi, et par exemple, il existe des éléments comprenant des composés sous forme poudreuse et/ou fibreuse, ce qui pose des problèmes de dispersion et/ou de manipulation. Des problèmes structuraux peuvent aussi se poser, dans le cadre par exemple de compromis à atteindre entre des exigences d'une part de protection (par exemple thermique et/ou acoustique et/ou de barrière anti-feu comme précité) et d'autre part de volume et/ou de poids, notamment dans le cas de montage dans des endroits exigus et/ou difficiles d'accès. Des exigences de formes particulières peuvent aussi être établies.

Par exemple dans une automobile, le sol et les parois reliant l'habitacle à l'espace du coffre et le compartiment des passagers à l'espace du moteur sont doublés de pièces moulées isolantes. Ces pièces moulées doivent être adaptées à des pièces de châssis parfois complexes, irrégulières en tenue mécanique et/ou capacité de protection.

Certaines pièces moulées tridimensionnelles, par exemple pour l'isolation acoustique, peuvent être produites à partir de mousse PU (polyuréthane). Cependant, ceci est relativement coûteux. En outre, la mousse PU est également difficile à recycler. Les pièces moulées fabriquées à partir de tapis de fibres classiques, qui sont fabriquées à partir de matériaux fibreux par des rouleaux, ne conviennent qu'à un degré limité. Les tapis de fibres ne peuvent être utilisés que pour des pièces faiblement déformées. En outre, en raison de la méthode de laminage, ils ne présentent pas une distribution de densité uniforme. Par conséquent, ils ne correspondent souvent pas aux exigences géométriques et acoustiques imposées sur ces pièces moulées spéciales.

US4035215, WO2004059063, WO2015093689, WO1999042330, KR102016061382A divulguent un assemblage comprenant :
un élément structurel en trois dimensions, présentant une forme cintrée et/ou des reliefs et/ou des creux, interposé entre un environnement extérieur et un volume intérieur à protéger thermiquement et/ou acoustiquement,
et un élément intérieur de doublure de l'élément structurel, l'élément intérieur de doublure comprenant un ensemble interposé entre l'environnement extérieur et le volume intérieur à protéger, ledit ensemble, qui est formé en trois dimensions, comprenant :
   - une structure textile fibreuse en trois dimensions, tissé ou non-tissé, comprenant des fibres polymères, minérales ou naturelles, et présentant une forme cintrée et/ou des reliefs et/ou des creux, et
   - une enveloppe fermée :
      -- ayant une paroi, et
      -- dans laquelle est enfermée la structure textile fibreuse dont la forme est suivie par ladite paroi.

WO2015093689 divulgue par ailleurs le fait :
- que la structure textile fibreuse dudit ensemble définit une première structure textile fibreuse comprenant un matériau poreux ayant une première densité,
- que l'élément de doublure intérieur comprend en outre une deuxième structure textile fibreuse comprenant le même matériau poreux, ou un matériau poreux différent, et
- que les première et deuxième structures textiles fibreuses sont superposées.

Ainsi, WO2015093689 divulgue le préambule de la revendication 1.

Or, il est apparu important de pouvoir assurer des isolations thermique et acoustique pertinentes par une solution hybride faisant appel à un effet de masse pouvant absorber acoustiquement dans les basses fréquences.

C'est dans ce cadre, et afin d'apporter une solution adaptable à différents environnements exigeants, qu'il est ici proposé que l'assemblage ci-avant présenté soit tel que :,
- la deuxième structure textile fibreuse présente une deuxième densité qui est inférieure à la première densité,
- la deuxième structure textile fibreuse présente une forme cintrée et/ou des reliefs et/ou des creux, et que :
   - ledit ensemble et la deuxième structure textile fibreuse :
      -- soient enfermés ensemble dans une deuxième enveloppe ayant une paroi, et
      -- soient interposés entre deux surfaces majeures de ladite paroi, laquelle est thermoformée à l'endroit desdites deux surfaces majeures.

Le terme fibres est à comprendre de façon conventionnelle. Il s'agit d'éléments allongés présentant une longueur L (qui correspond à sa plus grande dimension) et, transversalement à cette longueur, une section suivant laquelle la fibre présente une dimension principale d (telle qu'une largeur ou un diamètre), avec un rapport tel que L≥5d, et de préférence L≥10d. On peut avoir un ou plusieurs types de fibres (tels que fibres de verre et autres).

La nature textile de la structure textile fibreuse apporte un effet structurant, avec pour résultat un ensemble assez léger et de formes pouvant être très variées.

L'enveloppe comprenant le film polymère sert de protection (pas de contact direct avec les fibres dont on évite la dispersion, ni avec la structure textile fibreuse, que l'on protège aussi). Le film peut aussi faciliter la manutention et le stockage.

Si ladite paroi de l'enveloppe fermée comprend (ou est constituée d')un dit film polymère (polymère seul ou doublé métal) thermoformé, on obtiendra un ensemble thermoformé dont on aura pu définir la forme avec peut-être davantage de précision, voire de possibilités, qu'avec une paroi métallique (acier ou aluminium, par exemple), quant à la forme cintrée et/ou aux reliefs (21 ci-après) et/ou aux creux (23 ci-après) que l'on pourra souhaiter obtenir.

Si on utilise un film polymère thermoformable, conformément à sa définition conventionnelle, cette enveloppe sera donc un objet souple dont (comme sa matière : le film) la forme et celle de la structure textile fibreuse qu'elle entoure s'épousant l'une, l'autre. Un synonyme est alors : sachet ou poche.

Bien sûr, dans tous les cas l'enveloppe entourera, en la recouvrant complètement, la structure textile fibreuse.

Les fibres contenues dans structure textile fibreuse tridimensionnelle (donc non plane) peuvent être ou non liées entre elles par un liant (sous-entendu chimique).

Dans le second cas, il est prévu favorablement :
- que la structure textile fibreuse soit donc dépourvue de liant visant à lier ainsi lesdites fibres entre elles, et,
- que ladite paroi de l'enveloppe présente une forme non plane (forme cintrée et/ou avec reliefs et/ou avec creux) qui impose à la structure textile fibreuse sa forme, de telle sorte que l'enveloppe maintienne ladite forme de la structure fibreuse.

Notamment avec un film polymère thermoformé, la combinaison entre la paroi de l'enveloppe et la structure textile fibreuse permettra tant d'atteindre que de maintenir dans le temps une forme 3D à la fois légère, à caractéristique thermique et/ou acoustique intéressante, voire mécaniquement solide, en fonction de la ou des densités de fibres retenues.

A ce sujet, il est par conseillé que ladite paroi présente une résistance à la rupture supérieure à 1MPa, et de préférence comprise entre 10MPa et 300MPa.

Ainsi, notamment en l'absence de liant entre fibres, tant sous forme qu'a fortiori de paroi plus épaisse et rigide (métal), ladite paroi pourra imposer à la structure textile fibreuse la forme 3D attendue, en la contraignant à se déformer par rapport à sa forme initiale brute, typiquement une forme 2D.

A ce sujet, on conseille aussi qu'alors (sans liant) la densité en fibres dans l'enveloppe soit comprise entre 5 kg/m3 et 250kg/m3 et préférentiellement entre 50 kg/m3 et 130 kg/m3. La densité de la structure textile fibreuse sera alors comprise entre 10 kg/m3 et 300kg/m3 et préférentiellement entre 60 kg/m3 et 150 kg/m3.

En outre, si ladite paroi de l'enveloppe est un film d'épaisseur inférieure à 500 microns, il est conseillé que l'ensemble obtenu présente une épaisseur maximale inférieure ou égale à 8mmm et de préférence inférieure à 3mm. Ainsi, on, pourra associer la finesse d'un ensemble thermoformé final à une résistance mécanique performante à l'issue du thermoformage.

Pour compléter le compromis légèreté / structuration / facilité de fabrication / fonctionnalisation(s) possible(s) au sein de l'enveloppe, il est toutefois aussi proposé que la structure textile fibreuse puisse comprendre un liant, de façon que soit formée une matrice où lesdites fibres seront liées ainsi entre elles à leurs zones de contact ou de croisement entre elles. Mais ceci n'est donc pas obligatoire. Les deux hypothèses sont traitées plus en détail ci-après.

S'il est présent, et dans le même but que ci-avant, le liant comprendra de préférence une colle et / ou un adhésif.

En outre, un tel ensemble se prête facilement à des applications fonctionnelles ciblées, notamment du fait de la structuration apportée par la structure fibreuse.

Aussi est-il proposé que ledit ensemble puisse comprendre en outre, dans l'enveloppe, un isolant thermique, de sorte qu'à température et pression ambiantes, l'ensemble thermoformé présente, à travers le film polymère, un coefficient de conductivité thermique (λ) inférieur à 40mW/m.K.

Dans la demande, température et pression ambiantes ont pour sens respectivement 20°C et 10⁵ Pa, à 10% près.

En particulier, avec la solution ici développée il sera possible que l'isolant thermique (tel un aérogel) soit disposé dans l'enveloppe, dans la structure textile fibreuse. Ceci facilite l'obtention de l'ensemble thermoformé et en limite le coût, tout en permettant des formes très variées et des effets de protection divers, suivant la concentration retenue. Le liant pourra alors figer et maintenir en place l'isolant thermique.

Autre approche également de fonctionnalisation pertinente que celle qui prévoit que ladite paroi de l'enveloppe soit étanche à l'air, que cette enveloppe soit fermée de façon étanche à l'air, et qu'il y règne, à température (20°C) et pression extérieures ambiantes (10⁵ Pa), une pression comprise entre moins de 10⁵ Pa et plus de 10⁻² Pa.

En effet, on utilisera alors pour un autre effet le film polymère, en augmentant l'effet de protection thermique dudit ensemble, du fait de la dépression créée dans l'enveloppe.

Dans le même contexte, il pourra être pertinent que, dans l'enveloppe, soit prévu (au moins) un matériau à changement de phase (MCP ; PCM en anglais).

Et, comme pour l'isolant thermique, il sera possible que ce matériau à changement de phase soit dispersé dans l'enveloppe, au sein de la structure fibreuse, avec les avantages déjà cités.

L'utilisation combinée de tels composants - fibres d'une part et particules dispersées pour le(s) MCP(s) et/ou l'isolant thermique d'autre part - permettra d'obtenir, de façon industriellement réalisable en série, une concentration variable de ces composants que le liant fixera et unira. Une fois les répartitions de densité des composants faites, et dès lors que les fibres et le liant sont partout sur la pièce finie, il suffira, avec une paroi à film therrmoformable de tout chauffer dans le moule de mise en forme où tous les composants auront alors été placés, pour que les fibres fondent les unes aux autres, le liant réunissant entre eux par polymérisation tous les composants, en respectant la concentration variable retenue. La solidification en une pièce moulée rigide pourra être alors être obtenue par durcissement ou par polymérisation.

Avec une réalisation d'ensemble comme ci-avant, et qu'il y ait ou non de l'isolant thermique et/ou du MCP, ledit ensemble présentera favorablement, à 5% près, une épaisseur entre 0.8 et 20mm, et une densité entre 5 et 350Kg/m3.

Avec ces caractéristiques, un coefficient d'absorption en fonction de la fréquence compris entre 60 et 90% pour une fréquence d'excitation dudit ensemble comprise entre 2000 et 4000 Hz est attendu. De préférence, le volume poreux (espace vide) sera compris entre 80 et 99% (en volume).

Avec ou sans liant, un autre aspect prévoit que l'invention permet d'adapter ledit ensemble à son environnement opérationnel, et en particulier d'obtenir :
- que ledit ensemble présente des premières zones avec une première épaisseur et des deuxièmes zones avec une deuxième épaisseur inférieure à la première épaisseur,
- et que les deuxièmes zones présentent alors une densité en fibres supérieure à la densité en fibres des premières zones.

Ainsi, on pourra aisément faire varier la conductivité thermique et/ou la résistance mécanique dans le sens de l'épaisseur, certes dans une mesure limitée, mais sans avoir nécessairement à ajouter de charges dans la structure textile (MCP ou matière isolante thermique comme un aérogel ; voir ci-après). Autre avantage : amélioration des propriétés acoustiques du fait de la densification ou non ; si dense : absorption des basses fréquences, si peu dense : absorption des hautes fréquences.

L'invention sera si nécessaire mieux comprise et d'autres détails, caractéristiques et avantages de l'invention pourront apparaître à la lecture de la description suivante faite à titre d'exemple non limitatif en référence aux dessins annexés dans lesquels :
- la figure 1 est une vue en coupe d'un tronçon de pièce correspondant à l'ensemble précité selon l'invention, cette vue étant complétée par un agrandissement local ;
- la figure 2 correspond à l'agrandissement local de la figure 1, avec toutefois ajout de particules d'isolant thermique dispersées entres les fibres, dans la structure fibreuse ;
- la figure 3 correspond au tronçon coupé de la figure 1, avec cette fois ajout de particules de MCP dispersées dans la structure fibreuse ;
- la figure 4 est aussi une coupe planaire d'une pièce correspondant à l'ensemble précité selon l'invention, avec une sur-densification en fibres de renfort en périphérie, de même pour les coupes des figures 5 et 6 où l'ensemble illustré, selon l'invention, est toutefois soit pourvu de sur-densifications locales en particules d'isolant thermique (figure 5) et en MCP (figure 6), respectivement, dispersées dans la structure fibreuse, la coupe identique de la figure 7 correspondant à une structure fibreuse sans liant,
- la figure 8 schématise un exemple de structure textile fibre brut, dans une hypothèse sans liant, comme on l'utilise quand on vient la placer dans le moule de mise en forme,
- la figure 9 schématise une application à une portière d'automobile, et la figure 10 un assemblage (en coupe) à capacités thermique et acoustique renforcées, à double poche l'une dans l'autre et double épaisseur d'isolants.

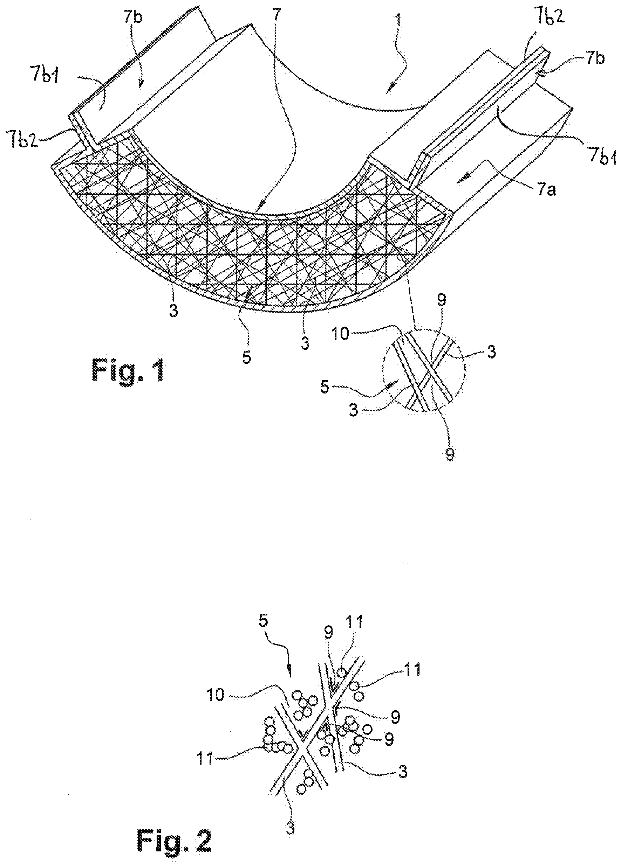

On a donc représenté, en figure 1, un ensemble 1 thermoformé en trois dimensions.

Cet ensemble comprend :
- une structure textile fibreuse 5 en trois dimensions comprenant des fibres 3, et
- une enveloppe 7 extérieure comprenant (ou constituée par) une paroi 7a.

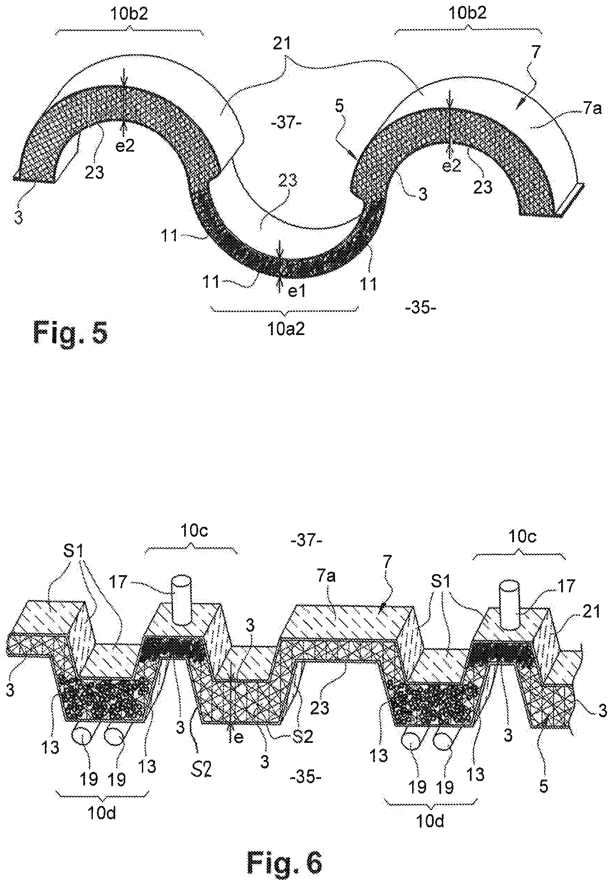

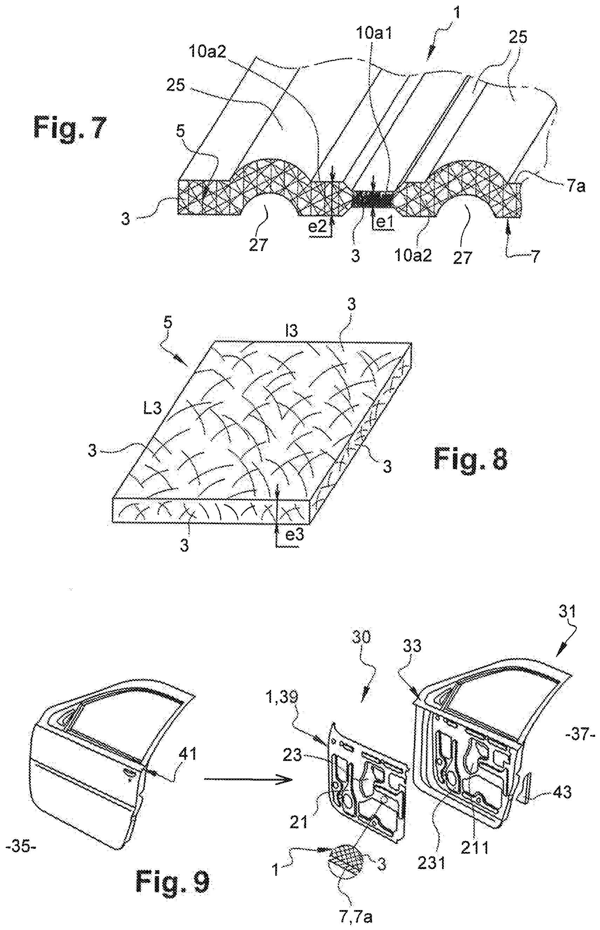

On aura compris que l'expression « en trois dimensions » (3D) équivaut, comme dans le sens commun, à non (intégralement) plan. L'ensemble 1 thermoformé, comme donc la structure textile fibreuse 5, est représenté cintré ; mais ils pourraient aussi présenter des reliefs et/ou des creux locaux communs, comme par exemple en zones respectivement 25, 27 sur la figure 7, ou en figures 5,6 (zones 21 ,23). En anglais, ces creux et reliefs (ou bosses) peuvent être des « embossements ».

La structure textile fibreuse 5 est un tissé ou un non-tissé. Un feutre sera a priori intéressant.

On désigne par feutre une structure non tissée obtenue en pressant et en agglutinant des fibres.

Le feutre, ou plus généralement la structure textile fibreuse 5, peut se présenter comme une plaque (voir figure 8 : e << I < L) ou un bloc (e < I < L). La forme sera typiquement 2D (plane). Il pourra y avoir plusieurs parties côte-à-côte ou superposées. Un liant chimique n'est pas requis (solution de la figure 8).

La paroi 7a peut être une paroi métallique de quelques dixièmes de mm d'épaisseur ou bien être thermoformable, dans le sens où elle comprend alors un film polymère (ou un film complexe ou composite, comme notamment polymère et métal : film en PET métallisée où un film en PET a été vaporisée par de l'aluminium) qui a été thermoformé.

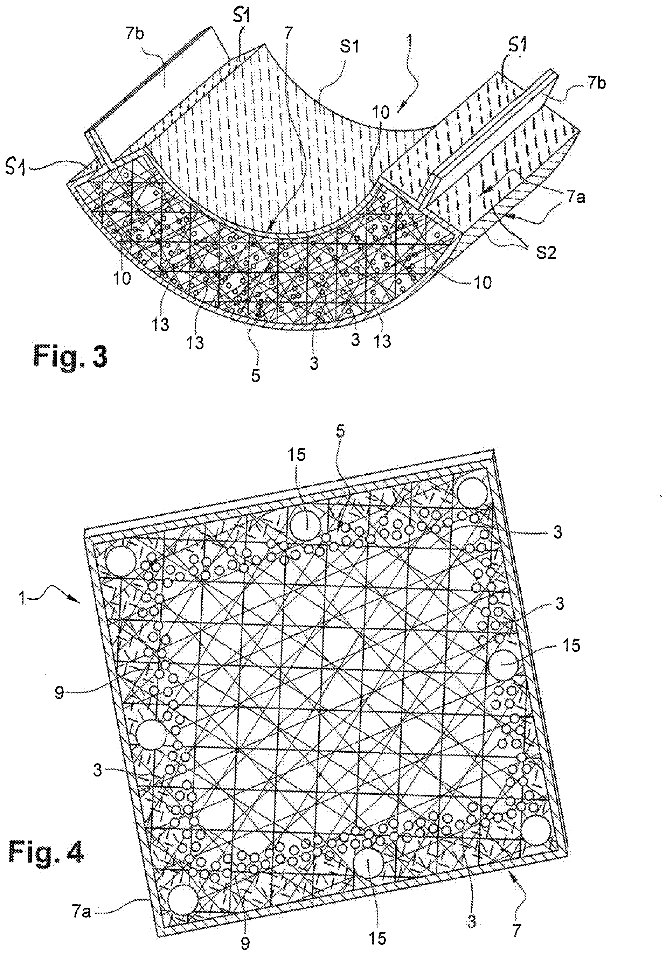

Dans le second cas, le film polymère 7a aura été thermoformé à l'endroit des deux surfaces majeures (ou principales), S1 et S2 figure 3 ou 6 (surfaces opposées l'une à l'autre, en traits tiretés), entre lesquelles la structure textile fibreuse 5, qui est en trois dimensions, présente une forme cintrée et/ou des reliefs 21 et/ou des creux 23. Ce thermoformage du film polymère 7a n'aura donc pas été limité, comme dans une pièce plane 2D, à la zone périphérique mineure/marginale en terme de surface (zones 7b figures 1,3 puisqu'il s'agit de coupes) où il y a inter-liaison des feuilles formant le film 7a et où ces feuilles sont scellées entre elles, typiquement thermosoudées, pour fermer l'enveloppe.

L'enveloppe 7 contient de façon fermée la structure fibreuse 5 ; et sa paroi 7a suit (ou épouse) la forme de cette structure fibreuse, là, où elle lui fait face (surfaces majeures S1 et S2).

Sceller sur elle-même, par exemple par soudage ou collage, la paroi 7a - qui peut comprendre deux feuilles -, une fois la structure fibreuse 5 ainsi entourée, permettra de fermer l'enveloppe 7. En effet, pour réaliser l'ensemble 1 par exemple avec un film polymère 7a thermoformable, on aura typiquement pu :
- partir d'une structure fibreuse 5 « de base » a priori formée donc comme au moins un bloc, ou une plaque (voir figure 8 : forme plane, 2D : sans relief ni creux),
- puis placer ce(s) boc(s)/plaque(s) :
   -- soit entre deux tronçons de dit film polymère 7a,
   -- soit dans une poche ouverte formée de ce film 7a, où on l'(les) aura glissé(s),

   - ensuite, on aura :
      --soit scellés ensemble lesdits tronçons de film polymère 7a,
      -- soit scellé l'ouverture de la poche,
   ce scellement pouvant avoir été réalisé pendant le thermoformage (via la chaleur dégagée), soit indépendamment, a priori avant le thermoformage.

Comme schématisé figure 8, la plaque se différenciera du bloc en ce qu'il existe alors un rapport d'au moins cinq entre l'épaisseur e3 et les longueur (L3) et largeur (l3).

Comme mentionné ci-avant, le scellement sur lui-même de la paroi7a aura pu consister en un collage ou un soudage.

Ceci confirme que, dans l'ensemble 1 formé en trois dimensions, la structure textile fibreuse 5 et l'enveloppe 7 conservent, comme initialement, leurs identités structurelles respectives. Elles ne sont pas fusionnées. Elles demeurent identifiables distinctement ; elles sont structurellement indépendantes l'une de l'autre : Il est possible de couper l'enveloppe 7 et de la retirer de sa position autour la structure fibreuse 5 sans avoir à l'en arracher. Ce n'est donc pas un revêtement ou une couche de surface (coating en anglais, comme dans US4035215).

S'il s'agit d'un « film », le matériau 7a présentera favorablement une épaisseur comprise entre 30 et 800 microns, de préférence entre 30 et 450 microns et encore préférentiellement entre 50 et 150 microns.

Dans la structure textile fibreuse 5, des fibres autres que polymères : minérales (verre, basalt par exemple) ou naturelles (cellulose, lin, chanvre par exemple) peuvent être utilisées. En première hypothèse, les fibres 3 ne seront pas liées entre elles par un composé formant un liant (chimique). Sans liant pour les réunir (voir ci-après et figure 8, dans une forme brut du produit, avant mise sous enveloppe et thermoformage), les fibres 3 sont malgré tout liées par la nature textile de la structure 5 qu'elles forment.

Si cette structure 5 est un feutre, sa nature de non tissé assure aux fibres leur cohésion, celles-ci étant en effet alors agglomérées ensemble, par exemple par soufflage, et mise sous pression, avec un possible ébouillantage, dans la forme brut initiale, laquelle sera a priori une forme 2D.

Dans ce cas, on conseille que l'ensemble 1 présente une épaisseur maximale inférieure ou égale à 20mm, de préférence à 8mm et encore de préférence à 3mm. Et si on utilise un film polymère thermoformé 7a, on recommande qu'il présente alors une résistance à la traction telle que le maintien de l'intégrité recherchée de la forme 3D soit assuré.

Cette résistance à la traction (« tensile strength » en anglais/ UTS, souvent abrégé en (TS), ou « ultimate strength », Ftu) d'un film 7a type, que ce soit dans une version après l'étape précitée de thermoformage, ou avant (état de ce film tel que commercialisé avant sa mise en oeuvre conformément à la présente invention), sera favorablement supérieure à 1MPa, et de préférence comprise entre 10MPa et 300MPa et encore préférentiellement entre 50MPa et 100MPa.

Si on ne respecte pas ces caractéristiques, le caractère relativement libre des fibres 3 et la résistance mécanique de l'enveloppe 7, dont le thermoformage aura donc figé une forme « 3D » commune par contrainte des fibres et ramollissement du film 7a, ne pourront assurer à l'ensemble thermoformé 1 un maintien en forme 3D dans le temps :
- suite au relâchement de contrainte après thermoformage, et sans liant, les fibres de la structure textile 5 tendront à reprendre leur état (forme notamment) initial, avant thermoformage,
- et le film d'enveloppe ne pourra empêcher cela.

De là une possible préférence pour une paroi 7a métallique un peu plus épaisse.

Comme on y revient ci-après aussi en liaison avec la figure 6, on pourra en outre, avec de telles caractéristiques, obtenir que l'ensemble formé 1 présente des premières zones 10a1 ayant une première épaisseur e1 et des deuxièmes zones 10b1 ayant une deuxième épaisseur e2 supérieure à la première épaisseur e1 (e1<e2), les premières zones 10a1 présentant une densité en fibres 3 supérieure à la densité en fibres 3 des deuxièmes zones 10b1 ; voir figure 7 où, si l'épaisseur maximale est supposée être e2, on aura e2≤8mm et de préférence e2≤3mm.

Si la structure fibreuse 5 comprend des fibres sans liant 9, les densités respectives de fibres 3 dans les premières zones 10a1 et deuxièmes zones 10b1 seront chacune uniformes (égales) sur toutes les épaisseurs respectives e1,e2. Ces variations de densités entre les zones telles que 10a1,10b1 pourront être atteintes en partant d'épaisseurs différentes de ces zones entre elles (respectivement e1+X et e2+X). La compression globalement uniforme sur la surface extérieure de la structure fibreuse 5, créée lors du thermoformage du film 7a si tel a été le choix, permettra d'atteindre les épaisseurs précitées, respectivement e1 et e2.

La densité (plus forte) en fibres 3 des zones 10a1 (voir aussi zones 10c figure 6) sera favorablement supérieure à 300kg/m3, et de préférence supérieure à 450kg/m3. Celle, plus faible, des zones 10b1 (voir hors zones 10c figure 6) sera favorablement inférieure à 150kg/m3, et de préférence entre moins de 100kg/m3 et 30kg/m3.

En seconde hypothèse, il est donc possible que, dans la structure fibreuse 5, soit présent un liant d'apport 9, de façon que les fibres 3 soient liées ainsi entre elles, comme dans les exemples des figures 1 à 4.

Les fibres 3 adhèrent alors entre elles à leurs zones ou points de contact. La technique de fabrication peut être celle de EP-A-2903800, une structure fibreuse et un procédé de fabrication étant connus par les documents DE 103 24 735 et DE 10 2007 054424.En tant que liant 9, on pourra ainsi utiliser une colle et / ou un adhésif, tel que de la résine époxy ou phénolique. Une résine thermodurcissable agissant par collage ou adhérence a été notée comme appropriée.

On peut alors prévoir que l'ensemble formé 1 présente une épaisseur maximale e,e2,e3 supérieure à 3mm. Le liant 9 participe tant à la mise à la forme de la structure textile fibreuse 5 (lors du thermoformage) qu'au maintien de l'intégrité de sa forme, dans le temps.

Pour l'utilisation d'un liant 9 réagissant à la chaleur, tel que, par exemple, des fibres de plastique, comme du polypropylène, ou une résine phénolique, on chauffera de façon que les fibres fondent et s'agglomèrent les unes aux autres, et qu'une pièce moulée rigide, indéformable, soit formée.

Avec un ensemble comme ci-avant constitué, on peut atteindre une pièce moulée rigide 1 qui conviendra, ayant, à 5% près :
- une épaisseur entre 2 et 10mm,
- une densité entre 5 et 350Kg/m³,
- et un coefficient d'absorption en fonction de la fréquence compris entre 60 et 90% pour une fréquence comprise entre 2000 et 4000 Hz.

Ainsi, cette pièce sera acoustiquement performante et pourra servir à une isolation phonique.

Afin de suivre la forme de la structure fibreuse 5, la paroi 7a de l'enveloppe 7 sera donc, avec ou sans liant 9, formée (thermoformée dans le cas du film polymère précité) autour de la structure fibreuse 5.

Avec ou sans liant 9 entre fibres, le formage pourra intervenir, de façon conventionnelle, dans un moule de mise en forme : le matériau de la structure 5 brute, sous forme a priori 2D (plaque ou bloc en particulier ; en une ou plusieurs pièces), est chauffé pour ramollir. Le film 7a l'est aussi si on en utilise un. On profite de cette ductilité pour mettre en forme sous pression, par moulage, la paroi 7a et le matériau de la structure 5. Le film 7a et le film 7a se rigidifie lorsqu'il refroidit, si utilisé). Avec matériau de la structure 5, il garde la forme 3D atteinte, du fait soit en particulier du liant 9, soit des paramètres précités (épaisseur structure 5 et résistance paroi 7a).

Si on choisit l'option film polymère 7a, ce pourra être un film polyimide ou PEEK, ou polyéthylène, ou polypropylène.

Il s'agira donc d'un thermoplastique ou thermodurcissable.
- qui sera suffisamment fin (de là le terme « film ») pour, sous l'action de la chaleur, fondre et se ramollir assez pour pouvoir, avec les fibres 3 qu'il entourera alors du fait de sa conformation préalable en poche fermée, être mis en forme sur un moule, et ainsi imposer à la structure fibreuse 5 la forme 3D (en volume) attendue (comme en l'espèce, forme cintrée et/ou des reliefs 21 et/ou des creux 23),
- tout en étant suffisamment épais (en fait suffisamment solide) pour maintenir dans le temps (des années) ladite forme imposée par son thermoformage, en empêchant que la structure fibreuse 5 perde la forme 3D atteinte, même en l'absence de liant 9 ; de là la résistance à la traction précitée.

Avec la structure fibreuse 5 précitée, et dès lors que, si un liant 9 est présent, il ne le sera qu'aux zones de jonction entre les composants, on obtiendra d'emblée une pièce 1 où les espaces vides 10 entre fibres assureront un effet d'isolation thermique.

A l'ensemble qui précède, on pourra toutefois (et tout en conservant cet effet) utilement adjoindre, dans l'enveloppe 7, au moins un isolant thermique 11, de sorte qu'à température et pression ambiantes, l'ensemble thermoformé présente, à travers le film polymère 7a, un coefficient de conductivité thermique (λ) inférieur à 40mW/m.K, et de préférence compris entre 18 et 25 mW/m.K ; voir figure 2.

En outre, avec la paroi 7a de protection, l'isolant thermique 11 pourra alors utilement être dispersé dans la structure fibreuse 5.

Avec un isolant thermique 11 sous forme de particules, le liant 9 pourra localement, s'il est présent, assurer une cohésion. Et une concentration variable en fonction des besoins pourra être atteinte.

Même possibilité si l'ensemble 1 comprend en outre, dans l'enveloppe 7, au moins un matériau à changement de phase (MCP), qui pourra donc être lui aussi dispersé dans la structure fibreuse 5.

Le MCP se présentant sous forme de particules 13 (figure 3), sa mise en oeuvre et son comportement au sein de la structure fibreuse 5 pourront être les mêmes que ceux d'un isolant thermique poudreux.

Et, du fait de la paroi 7a d'enveloppe, avantageusement thermoformé, qui suit la forme de la structure fibreuse 5 en l'enfermant, sera assurée une protection :
- mécanique (fonction de mise en forme puis de maintien, et on évite en outre le contact direct entre la structure fibreuse 5 et l'environnement extérieur, ainsi qu'une diffusion de poudre(s) hors de la structure fibreuse),
- anti-agglomérat (dès lors que la paroi 7a d'enveloppe ne « flottera » pas autour de la structure fibreuse 5, on évitera la constitution non souhaitée d'amas poudreux constitués de particules de MCP 13 et/ou d'isolant thermique 11),
- et/ou chimique (fonction anti-feu possible de la paroi 7a d'enveloppe).

Si on utilise une paroi 7a étanche à l'air, l'ensemble 1 pourra alors être très hermétiquement fermé (typiquement thermosoudé en zones 7b d'interliaison des feuilles formant la paroi 7a) de sorte que, dans l'enveloppe 7 règne, à température et pression extérieures ambiantes, une pression comprise entre moins de 10⁵ Pa et plus de 10⁻² Pa.

Une mise sous vide d'air partiel renforcera les effets tant d'isolation que de maintien de la dispersion des particules 11 et 13 dans la structure fibreuse 5.

Les figures 4-6 montrent des exemples privilégiés, opérationnels, de densifications/dispersions variables des fibres 3 et des particules 11 et/ou 13, dans la structure textile fibreuse 5, sous l'enveloppe 7, le tout pouvant être maintenu en cohésion et place, aux zones de contact, par le liant local 9 qui, comme on le voit bien, n'occupe pas tout l'espace laissé par les fibres et les autres composants.

Dans l'exemple de la figure 4, la structure textile fibreuse 5 comprend, périphériquement, une surdensification ou surconcentration en fibres 3 et en (particules de) MCP 13. La surdensification en fibres 3 est située autour des zones de fixation de la pièce 1 correspondant aux passages traversants (cercles) dont certains sont référencés 15. Cette surdensification peut résulter d'un dosage initial en fibres plus important dans certaines zones que dans d'autres. Elle peut aussi résulter d'une compression plus importante dans certaines zones que dans d'autres.

Dans l'exemple de la figure 5, la structure fibreuse 5 de la pièce 1 est plus fine en partie 10a2 (épaisseur e1), qu'elle ne l'est en partie(s) 10b2 (épaisseur e2). C'est en partie 10a2 plus fine que l'on trouve une sur-densification ou surconcentration en (particules d')isolant thermique 11, pour compenser la moindre épaisseur et conserver une conductivité thermique homogène.

Dans l'exemple de la figure 6, la structure textile fibreuse 5 de la pièce 1 est surchargée en fibres 3 (donc densité augmentée en fibres) en zones 10c par où la pièce peut être fixée via par exemple les tiges 17 et où la pièce présente des angles, donc des zones de potentielle faiblesse mécanique. Comme les zones 15, celles 10c définissent des zones intégrées de renfort ou de structuration mécanique, sans nécessité de renfort extérieur.

En zone(s) 10d la structure fibreuse 5 est (sur)chargée en (particules) MCP 13, là où la pièce 1 présente une ou des zone(s) d'échange thermique avec un fluide frigorigène ou caloporteur 19.

Ainsi, on peut précisément et à propos localiser les zones de (sur)densification ou (sur) concentration en particules et/ou fibres, là où le besoin est.

Comme déjà mentionné, un domaine notable d'application de l'invention est celui des véhicules. L'ensemble formé 1 en trois dimensions peut en particulier y définir un élément de doublure intérieur d'un élément structurel, ledit élément structurel séparant entre eux un environnement extérieur et un volume intérieur à isoler ou protéger thermiquement et/ou acoustiquement de cet environnement extérieur. L'élément de doublure intérieur peut aussi former une barrière anti-feu, comme précité, ceci avec des contraintes de volume exigu, de formes particulières et/ou de poids à limiter au maximum.

Aussi voit-on figure 9 un exemple d'assemblage 30, dans un véhicule 31 (ici une automobile, mais ce pourrait être un aéronef, notamment une cabine d'aéronef). Cet assemblage comprend :
- un élément structurel 33 interposé entre un environnement extérieur (EXT ;35) et un volume intérieur (INT ;37) du véhicule, ce volume intérieur (typiquement l'habitacle du véhicule) étant à protéger thermiquement et/ou acoustiquement de l'environnement extérieur 35, et
- un élément 39 de doublure intérieur de l'élément structurel 33, l'élément de doublure intérieur comprenant un ensemble 1 précité.

L'élément 33 de doublure est donc interposé entre les volumes 35 et 37.

L'élément structurel 33 peut être un panneau de porte, métallique, composite ou plastique. Il définit dans l'exemple le cadre structurel d'une portière d'automobile. Côté extérieur, peut être fixée à lui une tôle 41 de portière définissant l'habillage extérieur de la porte. Côté intérieur, peut être fixée à lui un habillage intérieur 43 (côté habitacle), de sorte que l'ensemble 1 soit interposé entre la tôle 41 et l'habillage intérieur 43.

Dans l'enveloppe totalement fermée 7 de cet ensemble 1 se trouvent, comme schématisé figures 5,6 (que l'on peut considérer être deux coupes respectives, dans le sens de l'épaisseur, à deux endroits différents de la surface définie par l'ensemble 1, voir hachures figure 9) :
- au moins une zone 10d privilégiée (priority area en anglais) où a été identifié un échange thermique à maitriser entre l'environnement extérieur 35 et le volume intérieur 37,
- et/ou au moins une zone (10a) de moindre épaisseur (e1),
- et/ou une ou des zone(s) 10c de fixation, où l'ensemble 1 est fixé à la structure 33.

Ces fixations à l'élément structurel 33 pourront comprendre des vissages, rivetages ou autres, par exemple via des tiges 17.

Et l'enveloppe 7 contiendra alors en outre l'une au moins parmi :
- une charge en (particules d'un) matériau 13 à changement de phase (MCP) et/ou une charge en (particules d'un) isolant thermique 11, là où se trouve la ou lesdites zone(s) 10d privilégiées d'échange thermique,
- et/ou une surcharge en fibres 3, là où se trouve la ou les zone(s) de fixation et/ou là où se trouve la ou lesdites zone(s) de moindre épaisseur (e1).

Plutôt que, comme figure 6 où on trouve donc dans l'enveloppe 7 une charge de (particules de) MCP 13 là où la pièce 1 présente une ou des zone(s) d'échange thermique avec un fluide frigorigène ou caloporteur 19, on préférera ici une charge ou une surcharge en isolant thermique 11 (tel que au moins une couche de polyuréthane, ou des fibres de polyester dispersées dans la structure textile fibreuse), là où se trouve la ou les zones 10d privilégiées d'échange thermique, c'est-à-dire là où on aura identifié, dans le sens de l'épaisseur (e) de l'enveloppe 7, une ou des zones où le coefficient de conductivité thermique local (λ) est plus élevé qu'un seuil prédéfini, entre les volumes 35 et 37.

Il doit par ailleurs être compris que les solutions associables entre les modes de réalisation, comme entre les figures (telles que les combinaisons entre fibres 3, isolant thermique 11 et MCP 13 sur les figures 5,6), sont transférables d'une réalisation à l'autre et peuvent être ainsi associées entre elles.

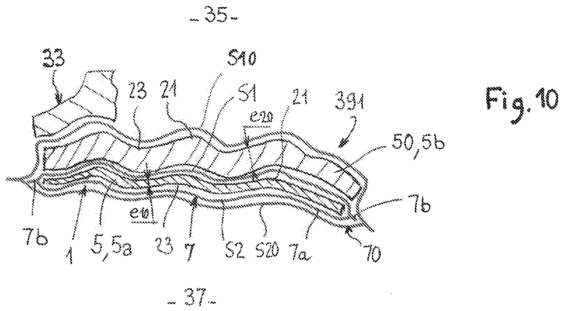

Un autre aspect performant a été schématisé figure 10. Il s'agit d'une solution où on va pouvoir traiter des problèmes tant thermique qu'acoustique de façon affinée.

Cette solution propose en effet d'obtenir une isolation thermique renforcée et une isolation acoustique pertinente, en associant :
- avec un élément 33 structurel séparant donc un environnement extérieur 35 d'un volume intérieur 37 à protéger thermiquement et/ou acoustiquement,
- un élément 391 de doublure intérieur de l'élément structurel 33, l'élément 391 comprenant au moins un dit élément 1 isolant thermique.

Plus précisément, il est proposé d'abord de reprendre l'assemblage précité, avec donc ledit au moins un élément 1 isolant thermique comprenant sa structure textile fibreuse 5 dans son enveloppe 7 formée par la paroi barrière 7a. Cette paroi 7 est toujours thermoformée à l'endroit desdites deux surfaces majeures (S1,S2) entre lesquelles la structure textile fibreuse 5, qui est en trois dimensions, présente donc une forme cintrée et/ou des reliefs et/ou des creux, comme schématisé.

Toutefois, dans cette solution il est en outre prévu :
- que cette structure textile fibreuses 5 définisse une première structure textile fibreuse comprenant un matériau poreux 5a ayant une première densité,
- que l'élément 391 de doublure intérieur comprenne en outre une deuxième structure textile fibreuse 50 comprenant le même matériau poreux (5a), ou un matériau poreux 5b différent, ayant une deuxième densité.

La deuxième densité est inférieure à la première densité, et la première structure textile 5 est superposée avec la deuxième structure textile 50.

Superposé a ici pour sens qu'on a ainsi une double épaisseur : celles cumulées des structures textiles fibreuses 5,50 entre les zones 35 et 37. La superposition n'est pas nécessairement dans un plan horizontal ; elle peut être par exemple dans un plan vertical, comme dans l'exemple d'une portière d'automobile figure 9. A noter à ce sujet que d'autres applications que sur un véhicule sont possibles ; dans le bâtiment par exemple.

Ceci précisé, on notera encore :
- que la deuxième structure textile fibreuse 50 présente une forme cintrée et/ou des reliefs 21 et/ou des creux 23, et
- que l'élément 1 isolant thermique et la deuxième structure textile fibreuse 50 sont :
   -- enfermés ensemble dans une deuxième enveloppe 70 à paroi 70a,
   -- et interposés entre deux surfaces majeures S10,S20 de ladite paroi 70a, cette paroi 70a étant thermoformée à l'endroit desdites deux surfaces majeures S10,S20.

On aura compris que les deux surfaces majeures S10,S20 sont l'image sur l'enveloppe 70 et sa paroi 70a des deux surfaces majeures S1,S2 sur l'enveloppe 7 et sa paroi 7a. La zone périphérique mineure/marginale en terme de surface, ici 70b image de 7b, demeure.

La deuxième enveloppe 70 n'est pas nécessairement sous vide. La deuxième structure textile fibreuse 50 peut être dans une troisième enveloppe sous vide, elle-même donc alors logée, avec la première enveloppe 70, dans la deuxième enveloppe 70.

Typiquement moins comprimée que la première structure textile fibreuse 5, la deuxième structure textile fibreuse 50 présentera une épaisseur e20 supérieure à l'épaisseur e10 de la première structure textile fibreuse 5, ceci étant à considérer partout ou sur l'essentiel au moins de la plus grande des surfaces des deux structures textiles fibreuses 5,50.

L'épaisseur e20 peut être de 3 à 15mm. L'épaisseur e10 peut être de 0.5 à 2.5mm. La première densité peut être de plus de 300 à 800kg/m³ ; la deuxième densité peut être de 100 à moins de 300kg/m³.

La première structure textile fibreuse 5 assure des isolations thermique et acoustique pertinentes. La deuxième structure textile fibreuse 50 assure une isolation thermique renforcée et une isolation acoustique plus limitée. On obtient ainsi une solution hybride avec un assemblage lourd (à effet de masse) qui absorbe dans les basses fréquences (20 à 200 Hz).

## Revendications

1. Assemblage comprenant :
- un élément (33) structurel en trois dimensions, présentant une forme cintrée et/ou des reliefs et/ou des creux, interposé entre un environnement extérieur (35) et un volume intérieur (37) à protéger thermiquement et/ou acoustiquement,
- et un élément (39,391) de doublure intérieur de l'élément structurel (33), l'élément (39,391) de doublure intérieur comprenant au moins un ensemble (1) interposé entre l'environnement extérieur (35) et le volume intérieur (37) à protéger, l'ensemble (1), qui est formé en trois dimensions, comprenant :
-- une structure textile fibreuse (5) en trois dimensions, tissé ou non-tissé, comprenant des fibres polymères, minérales ou naturelles (3), et présentant une forme cintrée et/ou des reliefs (21) et/ou des creux (23), et
-- une enveloppe (7) fermée :
--- ayant une paroi(7a), et
--- dans laquelle est enfermée la structure textile fibreuse (5) dont la forme est suivie par la paroi (7a),
la structure textile fibreuse (5) dudit ensemble (1) définissant une première structure textile fibreuse comprenant un matériau poreux (5a) ayant une première densité,
l'élément (39,391) de doublure intérieur comprenant en outre une deuxième structure textile fibreuse (50) comprenant le même matériau poreux (5a), ou un matériau poreux (5b) différent, , et
les première et deuxième structures textiles fibreuses (5,50) sont superposées,
**caractérisé en ce que** :
- la deuxième structure textile fibreuse (50) présente une deuxième densité qui est inférieure à la première densité,
- la deuxième structure textile fibreuse (50) présente une forme cintrée et/ou des reliefs et/ou des creux, et
- ledit ensemble (1) et la deuxième structure textile fibreuse (50) :
-- sont enfermés ensemble dans une deuxième enveloppe (70) ayant une paroi (70a), et
-- sont interposés entre deux surfaces majeures (S10,S20) de ladite paroi, laquelle est thermoformée à l'endroit desdites deux surfaces majeures.

2. Assemblage selon la revendication 1, dans lequel la deuxième structure textile fibreuse (50) :
- est moins comprimée que la première structure textile fibreuse (5) et
- présente une épaisseur (e20) supérieure à l'épaisseur (e10) de la première structure textile fibreuse (5),
ceci étant à considérer partout ou sur l'essentiel au moins de la plus grande des surfaces des première et deuxième structures textiles fibreuses.

## Patentansprüche

1. Baugruppe, enthaltend:
- ein dreidimensionales Strukturelement (33), das eine gebogene Form und/oder Erhebungen und/oder Vertiefungen aufweist und zwischen einer Außenumgebung (35) und einem thermisch und/oder akustisch abzuschirmenden Innenraum (37) eingefügt ist,
- und ein innenliegendes Auskleidungselement (39, 391) für das Strukturelement (33), wobei das innenliegende Auskleidungselement (39, 391) zumindest eine zwischen der Außenumgebung (35) und dem abzuschirmenden Innenraum (37) eingefügte Anordnung (1) aufweist ist, wobei die Anordnung (1), die dreidimensional ausgebildet ist, enthält:
-- eine dreidimensionale Textilfaserstruktur (5), die gewebt ist oder als Vlies vorliegt, polymere, mineralische oder natürliche Fasern (3) enthält und eine gebogene Form und/oder Erhebungen (21) und/oder Vertiefungen (23) aufweist, und
-- eine geschlossene Hülle (7),
--- die eine Wand (7a) aufweist und
--- in der die Textilfaserstruktur (5) eingeschlossen ist, deren Form von der Wand (7a) gefolgt wird,
wobei die Textilfaserstruktur (5) der Anordnung (1) eine erste Textilfaserstruktur definiert, die ein poröses Material (5a) mit einer ersten Dichte enthält,
wobei das innenliegende Auskleidungselement (39, 391) ferner eine zweite Textilfaserstruktur (50) enthält, die das gleiche poröse Material (5a) oder ein anderes poröses Material (5b) enthält, und
wobei die erste und die zweite Textilfaserstruktur (5, 50) übereinandergelegt sind,
**dadurch gekennzeichnet, dass**
- die zweite Textilfaserstruktur (50) eine zweite Dichte aufweist, die geringer ist als die erste Dichte,
- die zweite Textilfaserstruktur (50) eine gebogene Form und/oder Erhebungen und/oder Vertiefungen aufweist, und
- die Anordnung (1) und die zweite Textilfaserstruktur (50)
-- zusammen in einer zweiten Hülle (70) eingeschlossen sind, die eine Wand (70a) aufweist, und
-- zwischen zwei Hauptflächen (S10, S20) der Wand eingefügt sind, die an der Stelle der beiden Hauptflächen thermogeformt ist.

2. Baugruppe nach Anspruch 1,
wobei die zweite Textilfaserstruktur (50)
- weniger komprimiert ist als die erste Textilfaserstruktur (5) und
- eine Dicke (e20) aufweist, die größer als die Dicke (e10) der ersten Textilfaserstruktur (5) ist,
wobei dies überall oder zumindest auf den überwiegenden Teil der größten Fläche der ersten und der zweiten Textilfaserstruktur zutrifft.

## Claims

1. An assembly including:
- a three-dimensional structural element (33), having a curved shape and/or reliefs and/or recesses, interposed between an external environment (35) and an internal volume (37) to be thermally and/or acoustically protected,
- and an inner lining element (39,391) of the structural element (33), the inner lining element (39,391) comprising at least one said assembly (1), which is thereby interposed between the external environment (35) and the internal volume (37) to be protected, the three-dimensionally shaped assembly (1) comprising:
-- a three-dimensional fibrous textile structure (5), woven or nonwoven, comprising polymeric, mineral or natural fibres (3), and having a curved shape and/or reliefs (21) and/or recesses (23), and
-- a closed sleeve (7):
--- comprising a wall (7a), and
--- which encloses the fibrous textile structure (5), the shape of which is followed by the wall (7a).
the fibrous textile structure (5) of said assembly (1) defining a first fibrous textile structure comprising a porous material (5a) having a first density,
the inner lining element (39,391) further comprising a second fibrous textile structure (50) comprising the same porous material (5a) or different porous material (5b), and
the first and second fibrous textile structures (5.50) being superimposed, **characterized in that**:
- the second fibrous textile structure (50) has a second density lower than the first density, and
- the second fibrous textile structure (50) has a curved shape and/or reliefs and/or recesses, and
- said assembly (1) and the second fibrous textile structure (50):
-- are enclosed together in a second closed sleeve (70) comprising one said wall (70a), and
-- are interposed between two major surfaces (S10, S20) of said wall, which is thermoformed at said two major surfaces.

2. An assembly according to claim 1 wherein the second fibrous textile structure (50):
- is less compressed than the first fibrous textile structure (5) and
- and has a thickness (e20) greater than the thickness (e10) of the first fibrous textile structure (5),
this being to be considered everywhere or over at least most of the greater of the surfaces of the first end second fibrous structures.
